# EUROPEAN PATENT SPECIFICATION

(11) **EP 4 570 599 B1**
(45) Date of publication and mention of the grant of the patent: **20.05.2026**
(21) Application number: 23217255.1
(22) Date of filing: 15.12.2023
(51) Int. Cl.: B60R 19/24

(54) **BUMPER STRUCTURE FOR A MOTOR VEHICLE**
STOSSFÄNGERSTRUKTUR FÜR EIN KRAFTFAHRZEUG
STRUCTURE DE PARE-CHOCS POUR UN VÉHICULE AUTOMOBILE

(43) Date of publication of application: 18.06.2025
(73) Proprietor: VOLVO TRUCK CORPORATION, 405 08 Göteborg (SE)
(72) Inventor: MAGADUM, Amit, 560093 Bangalore - Karnataka (IN); WADDATTI, Sharanbasav, 560038 Bangalore- Karnataka (IN)
(74) Representative: Germain Maureau

(56) References cited:
- EP-B1- 0 720 935
- CN-U- 213 442 430
- FR-A1- 2 744 966
- JP-U- S5 784 152

## Description

### TECHNICAL FIELD

The disclosure relates generally to a bumper structure for a motor vehicle and more particularly to a system for positioning a bumper face with respect to a bumper beam and for locking the bumper face to the bumper beam. The disclosure also relates to a method for locking a bumper face to a bumper beam. The disclosure can be applied in heavy-duty vehicles, such as trucks, buses, and construction equipment. Although the disclosure may be described with respect to a particular vehicle, the disclosure is not restricted to any particular vehicle.

### BACKGROUND

A bumper is mounted to both front and rear ends of a vehicle body. The bumper protects the vehicle body and functional devices such as lamp by absorbing collision energy when the vehicle collides with another vehicle or an object. Further, the bumper affects an aerodynamic performance of the vehicle and plays an important role in design parts. The bumper has a bumper assembly structure constructed by a bumper beam of the vehicle body, a mechanism for absorbing the collision energy, and a bumper face covering the bumper beam. The bumper beam can be formed from a high strength steel member in many cases to limit the increase in weight caused by the strengthened bumper. The bumper face is not arranged as a strengthening member, but is used to cover the bumper beam and make the bumper look more attractive. The bumper face is typically formed by a lightweight resin member that is easily deformed during a collision.

On the current production lines, the bumper face is attached to the bumper beam using conventional bolts and these bolts must be accessible from outside the bumper face, as the vehicle hood is closed. To access these bolts, end covers of the bumper face usually have to be removed. The use of end covers limits the freedom of style and design of the bumper and makes the attachment of the bumper face to the bumper beam particularly complex.

FR2744966 A1 discloses a device for immobilizing a bumper element on a vehicle body structure such that the bumper is positioned and secured without screwing during mounting, said device corresponding to the preamble of claim 1.

CN213442430 U discloses a front bumper support structure for commercial vehicles.

### SUMMARY

According to the invention, a bumper structure for a motor vehicle is proposed with the features of claim 1.

The first aspect of the disclosure may seek to use an automatic locking and unlocking system that eliminates the need for manual docking. During bumper docking, the retractable projection comes in contact with the bumper beam, causing the projection to retract. The projection comes out when the projection is aligned with the positioning hole which ensure that the bumper face locks onto the bumper beam. The bumper face is self guided in relation to the bumper beam, simply by contacting the positioning projections along the side members of the bumper beam. Moreover, since end covers are no longer necessary, different styles of bumper faces can be designed.

According to the invention, the bumper face is configured to be locked to the bumper beam by a movement of the bumper face from a position in which each positioning projection contacts in a retracted position with a side part of the bumper beam to a locking position in which each positioning projection extends in a non-retracted position at least partially inside a positioning hole.

In some examples, the side members of the bumper beam are connected to a vehicle body.

According to the invention, each retractable positioning projection is a positioning pin associated with a spring and configured to retract during contact of the side part of the bumper face with the side member of the bumper beam and to come out by spring force when the positioning pin extends in a non-retracted position at least partially inside the positioning hole.

According to the invention, a U-shaped bracket including two holes receiving the pin is mounted on each side part of the bumper face.

In some examples, an abutment of the pin makes it possible to limit the movement of the pin in the direction of the axis passing through the two holes.

In some examples, the pin is a beveled or a tapered pin.

In some examples, the bumper structure comprises bolts for attaching the bumper face to the bumper beam.

In some examples, the bumper structure is a front bumper structure.

In some examples, a motor vehicle comprises a bumper structure described above.

In some examples, the motor vehicle is a truck.

According to a second aspect of the disclosure, a method for locking a bumper face to a bumper beam of a motor vehicle implements a bumper structure described above.

In some examples, the method comprises:
- providing the bumper face,
- providing the bumper beam,
- moving the bumper face towards the bumper beam, so that each positioning projection contacts, in a retracted position, a side part of the bumper beam, and then so that each positioning projection extends in a non-retracted position at least partially inside the positioning hole, thereby defining the locking position of the locking system.

In some examples, the method further comprises:
- opening a hood of the motor vehicle and attaching the bumper face to the bumper beam using bolts.

In some examples, the motor vehicle is a truck and the bumper structure is a front bumper structure.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** is a schematic side view of a bumper structure of the prior art, during a first step of attaching a bumper face to a bumper beam.
**FIG. 2** is a schematic side view of a bumper structure of the prior art, during a second step of attaching the bumper face to the bumper beam.
**FIG. 3** is a detail view of **FIG. 2****.**
**FIG. 4** is a schematic side view of a bumper structure of the prior art, during a third step of attaching the bumper face to the bumper beam.
**FIG. 5** is a schematic side view of a bumper structure of the prior art, once the bumper face has been attached to the bumper beam.
**FIG. 6** is a schematic side view of a bumper structure of the invention, during a first step of attaching the bumper face to the bumper beam.
**FIG. 7** is a first detail view of **FIG. 6****.**
**FIG. 8** is a second detail view of **FIG. 6****.**
**FIG. 9** is a schematic side view of a bumper structure of the invention, during a second step of attaching the bumper face to the bumper beam.
**FIG. 10** is a cross-sectional view taken along an arrow line A-A of **FIG. 9****.**
**FIG. 11** is a schematic side view of a bumper structure of the invention, during a third step of attaching the bumper face to the bumper beam.
**FIG. 12** is a cross-sectional view taken along an arrow line A-A of **FIG. 11****.**
**FIG. 13** is a schematic side view of a bumper structure of the invention, during a fourth step of attaching the bumper face to the bumper beam.
**FIG. 14** is a cross-sectional view taken along an arrow line A-A of **FIG. 13****.**
**FIG. 15** is a schematic side view of a bumper structure of the invention, once the bumper face has been locked to the vehicle body.
**FIG. 16** is a schematic side view of a bumper structure of the invention, during a fifth step of attaching the bumper face to the bumper beam.

### DETAILED DESCRIPTION

Aspects set forth below represent the necessary information to enable those skilled in the art to practice the disclosure.

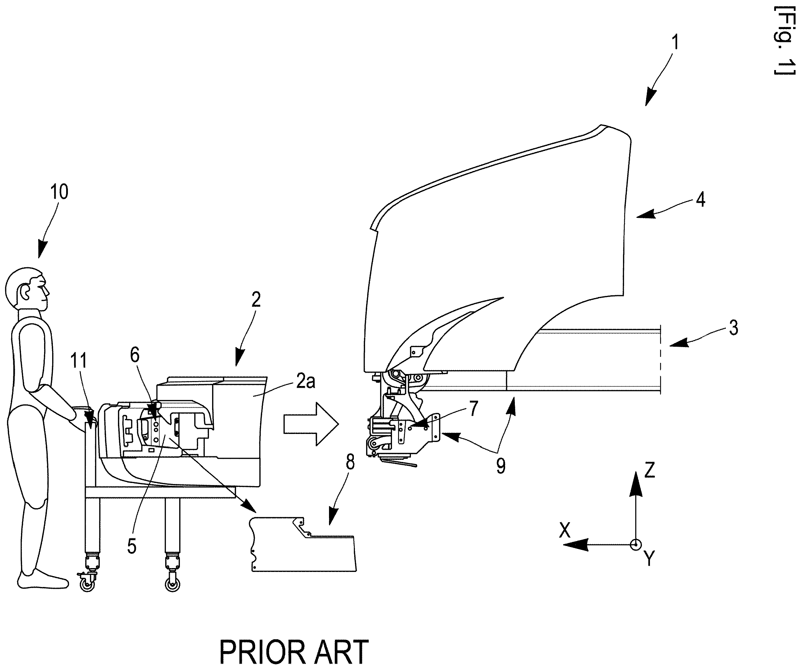

**FIG. 1** is a schematic side view of a bumper structure of a motor vehicle 1 of the prior art, during a first step of attaching a bumper face 2 to a bumper beam 3. The bumper structure extends generally in a longitudinal direction X corresponding to the longitudinal axis of the vehicle. The spatial representation of the bumper structure is supplemented by a transverse direction Y and a vertical direction Z.

**FIG. 1** shows the front part of a vehicle 1, typically a truck, and illustrates one example of a conventional device for attaching a bumper face 2 made typically of resin to a bumper beam 3 connected to a vehicle body 3. The bumper beam 3 is horizontally mounted and can include left-hand and right-hand side members 9 that are connected on the rear side to a vehicle body of the motor vehicle 1 and on the front side to a horizontal transverse front member of the bumper beam 3. The side members 9 may each comprise an upper part which is connected to the vehicle body and a lower part which is connected to the front member of the bumper beam 3. The bumper face 2 is fixedly mounted to the bumper beam 3 such that the bumper face 2 covers a front face of this bumper beam 3. A hood 4 covers the bumper assembly.

The bumper face 2 has left-hand and right-hand bumper face side parts 2a. The bumper face 2 has a side opening 5 on each side part 2a. Each opening 5 provides access to side bolts to secure the bumper face 2 laterally to the bumper beam 3 via mounting holes 6 of the bumper face 2 and corresponding mounting holes 7 of the bumper beam 3, typically mounting holes 7 of left-hand and right-hand side members 9.

Each opening side 5 is covered by a side cover 8. The cover 8 is, for example, a fog lamp cover.

The bumper face 2 in placed on a docking device 11 mounted on wheels. In this first step, a first operator 10 removes each cover 8 so as to leave the openings 5 visible and moves the bumper face 2 longitudinally towards the bumper beam 3 in order to align the mounting holes 6 of the bumper face 2 with the corresponding mounting holes 7 of the bumper beam 3.

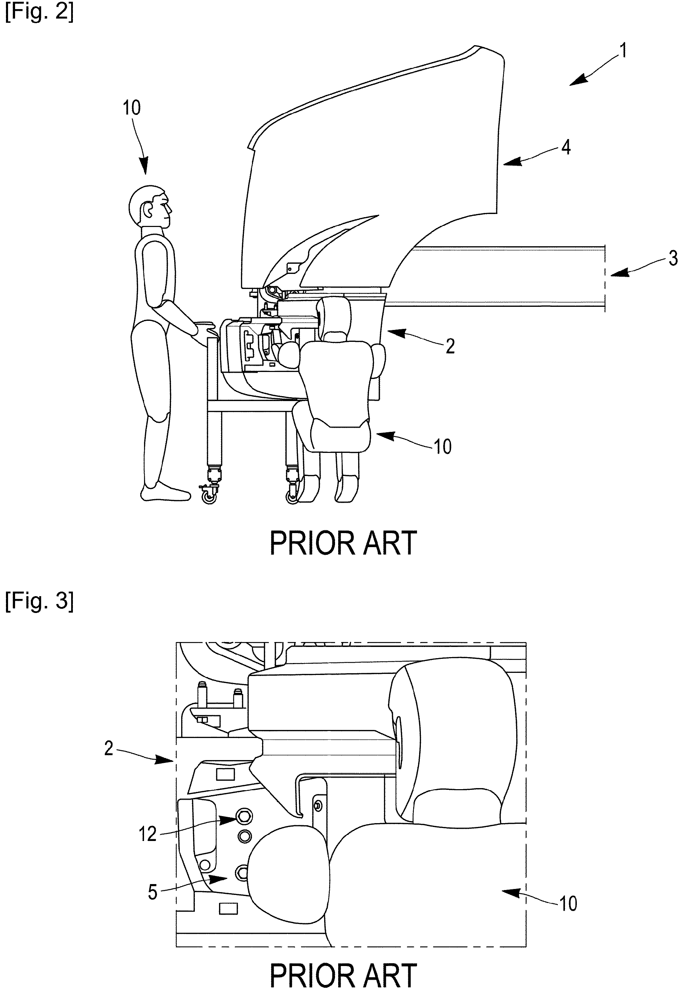

**FIG. 2** is a schematic side view of the bumper structure of the prior art, during a second step of attaching the bumper face 2 to the bumper beam 3. Once the mounting holes 6 of the bumper face 2 have been aligned with the corresponding mounting holes 7 of the vehicle body 3, a second operator 10 manually installs bolts 12 for attaching the bumper face 2 to the side members 9 of the bumper beam 3.

**FIG. 3** is a detail view of **FIG. 2** and shows how the bumper face 2 is attached to the bumper beam 3 by the second operator 10 using the bolts 12.

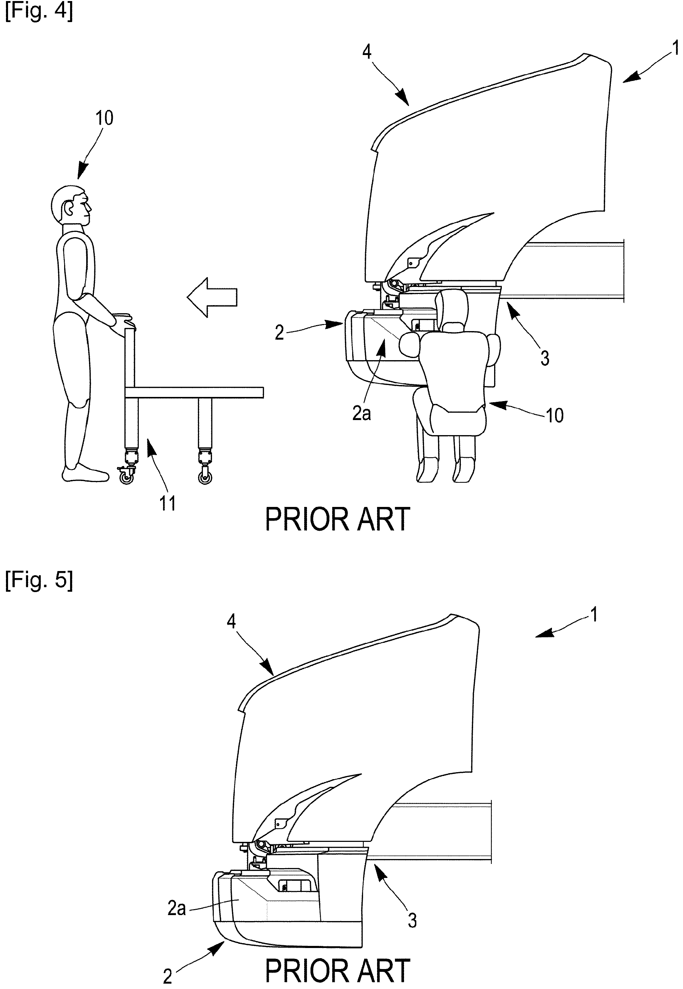

**FIG. 4** is a schematic side view of the bumper structure of the prior art, during a third step of attaching the bumper face 2 to the bumper beam 3. During this third step, the second operator 10 puts the side covers 8 back in place and the first operator 10 removes the docking device 11. The remaining bolts are then installed by opening the hood 4. Typically, the remaining bolts are used to fix a front upper flange of the bumper face 2 to a face of the bumper beam 3.

**FIG. 5** is a schematic side view of the bumper assembly structure of the prior art, once the bumper face 2 has been attached to the bumper beam 3.

The disadvantage of this attaching device is that it requires the presence of side covers on the bumper face and that a lot of time is needed to align the bumper face with the bumper beam and to lock the bumper face on the bumper beam. Additionally, two operators are needed.

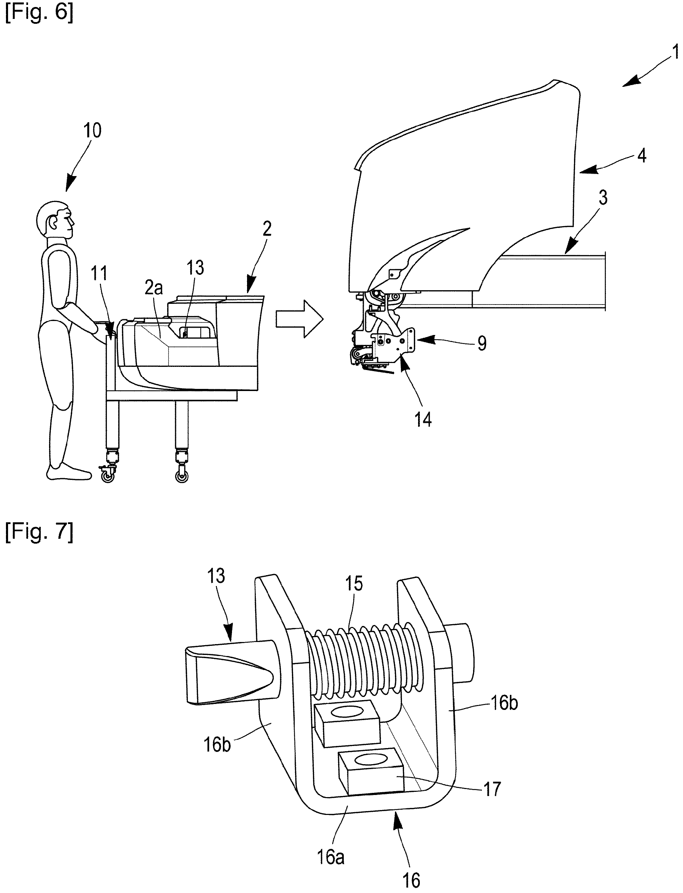

**FIG. 6** is a schematic side view of a bumper structure of the invention, during a first step of attaching the bumper face 2 to the bumper beam 3.

The bumper face 2 is placed on a docking device 11 mounted on wheels. The bumper face 2 includes on each side part 2a a retractable positioning projection 13. In this first step, a first operator 10 moves the bumper face 2 longitudinally towards the bumper beam 3 in order to align the retractable positioning projections 13 of the bumper face 2 with corresponding mounting holes 14 of the bumper beam 3.

**FIG. 7** is a first detail view of **FIG. 6** showing the retractable positioning projection 13. The retractable positioning projection 13 is typically a positioning pin 13 associated with a spring 15 and configured to retract during contact of the bumper face 2 with the bumper beam 3 and to come out by spring force when the positioning pin 13 is aligned with a positioning hole 14 of the bumper beam 3. The pin 13 is advantageously a beveled pin 13 or a tapered pin 13. A bracket 16 including two holes for the passage of the pin 14 is mounted on the bumper face 2. The bracket is a U-shaped bracket 16 including a bottom face 16a that is mounted on the bumper face 2 with for instance two flanged screws 17 and two faces 16b orthogonal to the bottom face 16a, each face 16b including a hole receiving the pin 13. An abutment 13a of the pin 13 makes it possible to limit the movement of the pin 13 in the direction of the axis passing through the two holes.

The positioning pin 13 may be circular or square in cross-section. The figures illustrate the use of one pin 13 on each side member 9 with one corresponding positioning hole 14. However, a different number of pins 13 could be used, for example two pins on each side member 9 associated each with one positioning hole.

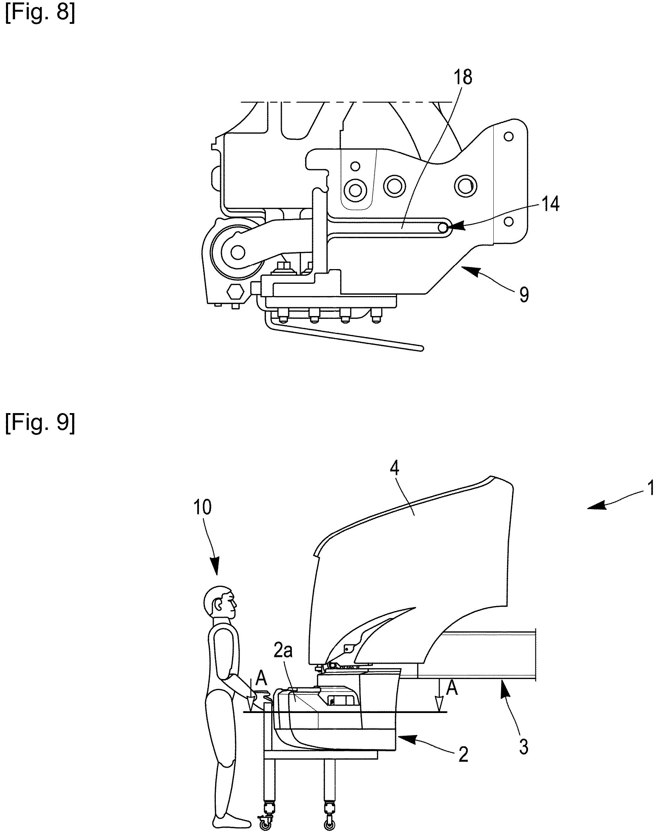

**FIG. 8** is a second detail view of **FIG. 6** showing the positioning hole 14 of each side member 9 of the bumper beam 3. Each positioning hole 14 is intended to receive one positioning pin 13. For each side member 9, the projection 13 can be in contact with the side member 9 along a guiding zone 18 of the side member 9 located at the front of the orifice 14.

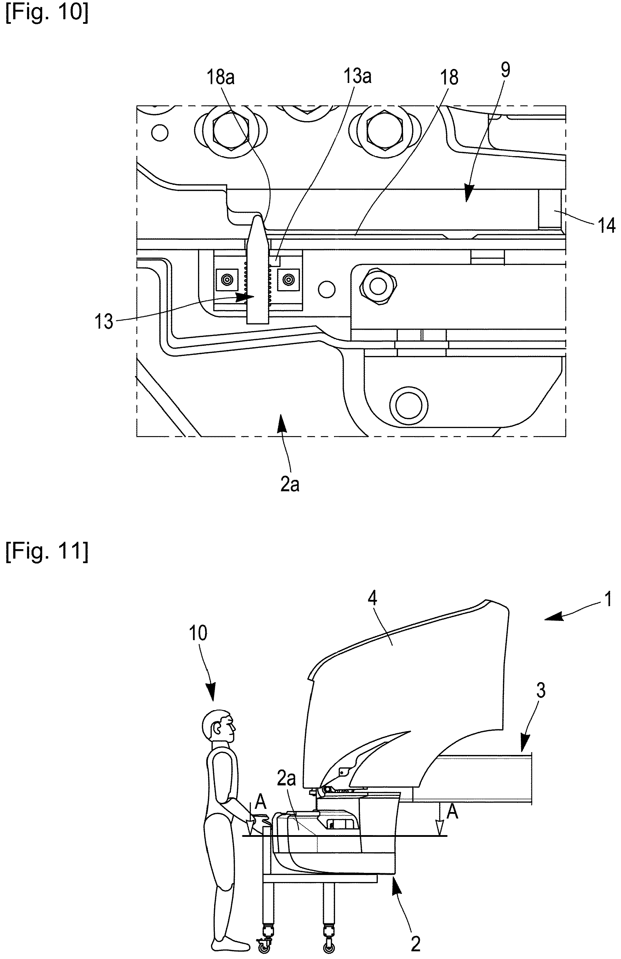

**FIG. 9** is a schematic side view of the bumper structure of the invention, during a second step of attaching the bumper face 2 to the bumper beam 3, whereas **FIG. 10** is a cross-sectional view taken along an arrow line A-A of **FIG. 9****.** The pin 13 is in its initial position, in which the pin 13 is uncompressed. Indeed, the spring 15 exerts pressure on the abutment 13a which is thus brought into contact with the face 16b located on the side of the bumper beam 3. The pin 13 is oriented transversely. In the initial position, the pin 13 is at the beginning of the guide zone 18 that advantageously includes a longitudinal stop 18a on which the non-retracted pin 13 rests.

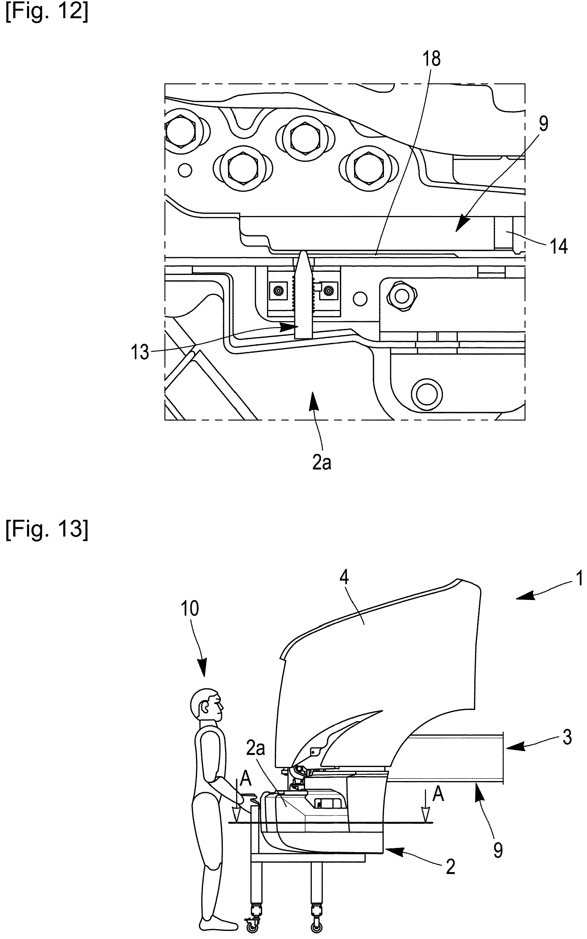

**FIG. 11** is a schematic side view of the bumper structure of the invention, during a third step of attaching the bumper face 2 to the bumper beam 3, whereas **FIG. 12** is a cross-sectional view taken along an arrow line A-A of **FIG. 11****.** The operator 10 pushes the bumper face 2 longitudinally towards the bumper beam 3. Each pin 13 passes the stop 18a and thus switches to a retracted configuration and comes into contact with the side member 9 of the vehicle body 3 along the guiding zone 18. The pin 13 is in an intermediate position, in which the pin 13 is pushed by the external surface of the side member 9 and compresses the spring 15 which keeps the pin 13 in contact with the side member 9.

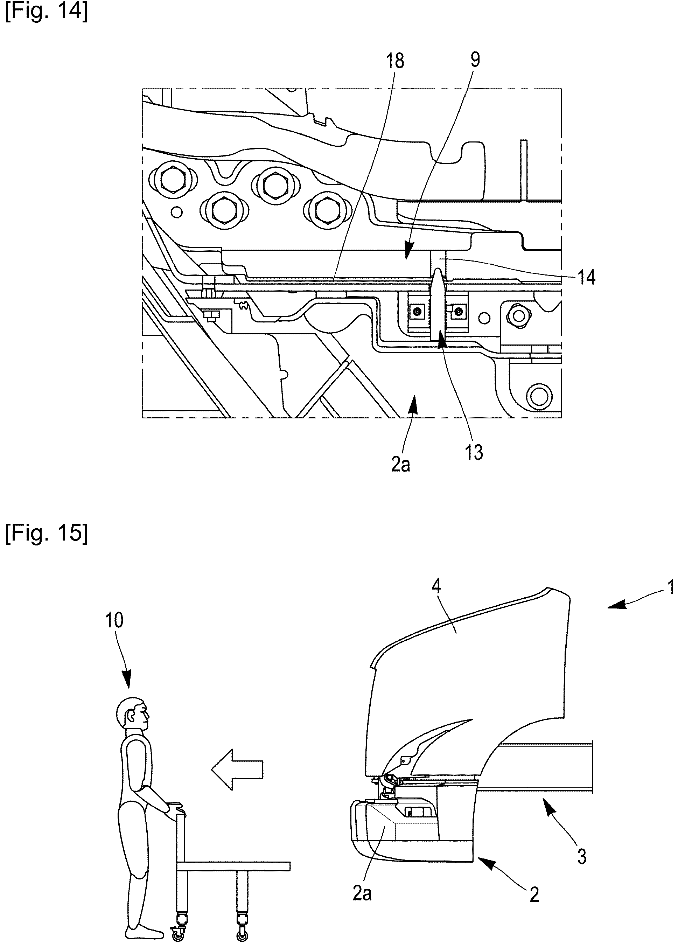

**FIG. 13** is a schematic side view of the bumper structure of the invention, during a fourth step of attaching the bumper face 2 to the bumper beam 3, whereas **FIG. 14** is a cross-sectional view taken along an arrow line A-A of **FIG. 13****.** Each pin 13 continues to slide against the side member 9 along the guiding zone 18 until the transverse pin axis coincides with the axis of the positioning hole 14 of the bumper beam 3. The spring 15 exerts pressure on the pin 13 which is pushed towards the inside of the positioning hole 14. Inserting the pin 13 inside the positioning hole 14 ensures locking of the bumper face 2 to the side member 9 of the bumper beam 3.

**FIG. 15** is a schematic side view of the bumper structure of the invention, once the bumper face 2 has been locked to the bumper beam 3. The operator 10 removes the docking device 11.

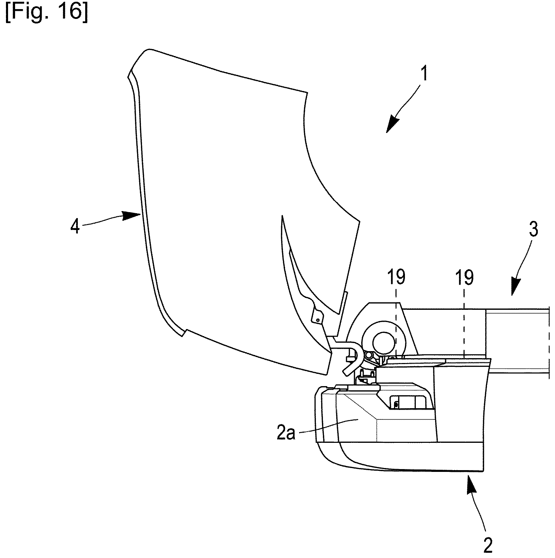

**FIG. 16** is a schematic side view of a bumper structure of the invention, during a fifth step of attaching the bumper face 2 to the bumper beam 3. The remaining bolts 19 are then installed by opening the hood 4. Typically, the remaining bolts 19 are used to fix a front upper flange of the bumper face 2 to a face of the bumper beam 3.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A bumper structure for a motor vehicle (1), the bumper structure comprising:
- a bumper face (2) forming an outer face of a bumper and comprising two side parts (2a),
- a bumper beam (3) to which the bumper face (2) is intended to be attached, the bumper beam (3) restraining deformation of the bumper face (2) and being intended to be covered by the bumper face (2), the bumper beam (3) including two side members (9),
wherein the bumper structure comprises a locking system (13, 14) allowing the bumper face (2) to be locked to the bumper beam (3),
wherein the locking system (13, 14) includes a retractable positioning projection (13) arranged on each side part (2a) of the bumper face (2), and a positioning hole (14) arranged on each side member (9) of the bumper beam (3) and configured to receive a positioning projection (13) in a locking position of the locking system (13, 14),
wherein each retractable positioning projection (13) is a positioning pin associated with a spring (15) and configured to retract during contact of the side part (2a) of the bumper face (2) with the side member (9) of the bumper beam (3) and to come out by spring force when the positioning pin (13) extends in a non-retracted position at least partially inside the positioning hole (14), **characterized in that**
a U-shaped bracket including two holes receiving the pin (13) is mounted on each side part (2a) of the bumper face (2).

2. The bumper structure of claim 1, wherein the bumper face (2) is configured to be locked to the bumper beam (3) by a movement of the bumper face (2) from a position in which each positioning projection (13) contacts in a retracted position with a side member (9) of the bumper beam (3) to a locking position in which each positioning projection (13) extends in a non-retracted position at least partially inside a positioning hole (14).

3. The bumper structure of claim 1 or 2, wherein the side members (9) of the bumper beam (3) are connected to a vehicle body.

4. The bumper structure of claim 1, wherein an abutment (13a) of the pin (13) makes it possible to limit the movement of the pin (13) in the direction of the axis passing through the two holes.

5. The bumper structure of claim 1, wherein the pin (13) is a beveled or a tapered pin.

6. The bumper structure of any of claims 1-5, wherein the bumper structure comprises bolts (19) for attaching the bumper face (2) to the bumper beam (3).

7. The bumper structure of any of claims 1-6, wherein the bumper structure is a front bumper structure.

8. A motor vehicle (1) comprising a bumper structure according to any of claims 1-7.

9. A motor vehicle (1) of claim 8, wherein the motor vehicle (1) is a truck.

10. A method for locking a bumper face (2) to a bumper beam (3) of motor vehicle (1), the method implementing a bumper structure according to claim 1.

11. The method of claim 10, the method comprising:
- providing the bumper face (2),
- providing the bumper beam (3),
- moving the bumper face (2) towards the bumper beam (3), so that each positioning projection (13) contacts, in a retracted position, a side member (9) of the bumper beam (3), and then so that each positioning projection (13) extends in a non-retracted position at least partially inside the positioning hole (13), thereby defining the locking position of the locking system (13, 14).

12. The method of claim 10, wherein the method further comprises:
- opening a hood (4) of the motor vehicle (1) and attaching the bumper face (2) to the bumper beam (3) using bolts (19).

13. The method of any of claims 10-12, wherein the motor vehicle (1) is a truck and wherein the bumper structure is a front bumper structure.

## Patentansprüche

1. Stoßfängerstruktur für ein Kraftfahrzeug (1), wobei die Stoßfängerstruktur umfasst:
- eine Stoßfängerfläche (2), die eine Außenfläche eines Stoßfängers bildet und zwei Seitenteile (2a) umfasst,
- einen Stoßfängerträger (3), an dem die Stoßfängerfläche (2) dazu bestimmt ist befestigt zu werden, wobei der Stoßfängerträger (3) Verformung der Stoßfängerfläche (2) eindämmt und dazu bestimmt ist, durch die Stoßfängerfläche (2) abgedeckt zu werden, wobei der Stoßfängerträger (3) zwei Seitenelemente (9) beinhaltet,
wobei die Stoßfängerstruktur ein Verriegelungssystem (13, 14) umfasst, das es ermöglicht, die Stoßfängerfläche (2) mit dem Stoßfängerträger (3) zu verriegeln,
wobei das Verriegelungssystem (13, 14) einen einziehbaren Positionierungsvorsprung (13) beinhaltet, der an jedem Seitenteil (2a) der Stoßfängerfläche (2) angeordnet ist, und ein Positionierungsloch (14), das an jedem Seitenelement (9) des Stoßfängerträgers (3) angeordnet ist und konfiguriert ist, um einen Positionierungsvorsprung (13) in einer Verriegelungsposition des Verriegelungssystems (13, 14) aufzunehmen,
wobei jeder einziehbare Positionierungsvorsprung (13) ein Positionierungsstift ist, der einer Feder (15) zugeordnet ist, und konfiguriert ist, um sich bei Kontakt des Seitenteils (2a) der Stoßfängerfläche (2) mit dem Seitenelement (9) des Stoßfängerträgers (3) einzuziehen und durch Federkraft auszufahren, wenn sich der Positionierungsstift (13) in einer nicht eingezogenen Position mindestens teilweise innerhalb des Positionierungsloches (14) erstreckt, **dadurch gekennzeichnet, dass**
an jedem Seitenteil (2a) der Stoßfängerfläche (2) eine U-förmige Halterung, die zwei Löcher zum Aufnehmen des Stifts (13) beinhaltet, montiert ist.

2. Stoßfängerstruktur nach Anspruch 1, wobei die Stoßfängerfläche (2) konfiguriert ist, um durch eine Bewegung der Stoßfängerfläche (2) von einer Position, in der jeder Positionierungsvorsprung (13) in einer eingezogenen Position mit einem Seitenelement (9) des Stoßfängerträgers (3) in eine Verriegelungsposition in Kontakt kommt, in der sich jeder Positionierungsvorsprung (13) in einer nicht eingezogenen Position mindestens teilweise innerhalb eines Positionierungsloches (14) erstreckt, mit dem Stoßfängerträger (3) verriegelt zu sein.

3. Stoßfängerstruktur nach Anspruch 1 oder 2, wobei die Seitenelemente (9) des Stoßfängerträgers (3) mit einer Fahrzeugkarosserie verbunden sind.

4. Stoßfängerstruktur nach Anspruch 1, wobei ein Anschlag (13a) des Stiftes (13) es ermöglicht, die Bewegung des Stiftes (13) in Richtung der Achse, die durch die beiden Löcher verläuft, zu begrenzen.

5. Stoßfängerstruktur nach Anspruch 1, wobei der Stift (13) ein abgeschrägter oder ein sich verjüngender Stift ist.

6. Stoßfängerstruktur nach einem der Ansprüche 1 -5, wobei die Stoßfängerstruktur Schrauben (19) zum Befestigen der Stoßfängerfläche (2) am Stoßfängerträger (3) umfasst.

7. Stoßfängerstruktur nach einem der Ansprüche 1-6, wobei die Stoßfängerstruktur eine vordere Stoßfängerstruktur ist.

8. Kraftfahrzeug (1), das eine Stoßfängerstruktur nach einem der Ansprüche 1 bis 7 umfasst.

9. Kraftfahrzeug (1) nach Anspruch 8, wobei das Kraftfahrzeug (1) ein Lastkraftwagen ist.

10. Verfahren zum Verriegeln einer Stoßfängerfläche (2) an einem Stoßfängerträger (3) des Kraftfahrzeugs (1), wobei das Verfahren eine Stoßfängerstruktur nach Anspruch 1 implementiert.

11. Verfahren nach Anspruch 10, wobei das Verfahren umfasst:
- Bereitstellen der Stoßfängerfläche (2),
- Bereitstellen des Stoßfängerträgers (3),
- Bewegen der Stoßfängerfläche (2) in Richtung des Stoßfängerträgers (3), sodass jeder Positionierungsvorsprung (13) in eingezogener Position mit einem Seitenelement (9) des Stoßfängerträgers (3) in Kontakt kommt, und sodass sich dann jeder Positionierungsvorsprung (13) in nicht eingezogener Position mindestens teilweise innerhalb des Positionierungsloches (13) erstreckt, wodurch die Verriegelungsposition des Verriegelungssystems (13, 14) definiert wird.

12. Verfahren nach Anspruch 10, wobei das Verfahren weiter umfasst:
- Öffnen einer Haube (4) des Kraftfahrzeugs (1) und Befestigen der Stoßfängerfläche (2) am Stoßfängerträger (3) unter Verwendung von Schrauben (19).

13. Verfahren nach einem der Ansprüche 10-12, wobei das Kraftfahrzeug (1) ein Lastkraftwagen ist und wobei die Stoßfängerstruktur eine vordere Stoßfängerstruktur ist.

## Revendications

1. Structure de pare-chocs pour un véhicule automobile (1), la structure de pare-chocs comprenant :
- une face de pare-chocs (2) formant une face extérieure d'un pare-chocs et comprenant deux parties latérales (2a),
- une poutre de pare-chocs (3) à laquelle la face de pare-chocs (2) est destinée à être fixée, la poutre de pare-chocs (3) limitant la déformation de la face de pare-chocs (2) et étant destinée à être couverte par la face de pare-chocs (2), la poutre de pare-chocs (3) comprenant deux éléments latéraux (9),
dans laquelle la structure de pare-chocs comprend un système de verrouillage (13, 14) permettant à la face de pare-chocs (2) d'être verrouillée sur la poutre de pare-chocs (3),
dans laquelle le système de verrouillage (13, 14) comprend une saillie de positionnement rétractable (13) agencée sur chaque partie latérale (2a) de la face de pare-chocs (2), et un trou de positionnement (14) agencé sur chaque élément latéral (9) de la poutre de pare-chocs (3) et configuré pour recevoir une saillie de positionnement (13) dans une position de verrouillage du système de verrouillage (13, 14),
dans laquelle chaque saillie de positionnement rétractable (13) est une goupille de positionnement associée à un ressort (15) et configurée pour se rétracter lors du contact de la partie latérale (2a) de la face de pare-chocs (2) avec l'élément latéral (9) de la poutre de pare-chocs (3) et pour sortir sous l'effet de la force du ressort lorsque la goupille de positionnement (13) s'étend dans une position non rétractée au moins partiellement à l'intérieur du trou de positionnement (14), **caractérisée en ce que**
un support en forme de U comprenant deux trous recevant la goupille (13) est monté sur chaque partie latérale (2a) de la face de pare-chocs (2).

2. Structure de pare-chocs selon la revendication 1, dans laquelle la face de pare-chocs (2) est configurée pour être verrouillée sur la poutre de pare-chocs (3) par un déplacement de la face de pare-chocs (2) depuis une position dans laquelle chaque saillie de positionnement (13) est en contact, dans une position rétractée, avec un élément latéral (9) de la poutre de pare-chocs (3) vers une position de verrouillage dans laquelle chaque saillie de positionnement (13) s'étend dans une position non rétractée au moins partiellement à l'intérieur d'un trou de positionnement (14).

3. Structure de pare-chocs selon la revendication 1 ou 2, dans laquelle les éléments latéraux (9) de la poutre de pare-chocs (3) sont reliés à une carrosserie de véhicule.

4. Structure de pare-chocs selon la revendication 1, dans laquelle une butée (13a) de la goupille (13) permet de limiter le mouvement de la goupille (13) dans la direction de l'axe passant par les deux trous.

5. Structure de pare-chocs selon la revendication 1, dans laquelle la goupille (13) est une goupille biseautée ou conique.

6. Structure de pare-chocs selon l'une des revendications 1 à 5, dans laquelle la structure de pare-chocs comprend des boulons (19) pour fixer la face de pare-chocs (2) à la poutre de pare-chocs (3).

7. Structure de pare-chocs selon l'une des revendications 1 à 6, dans laquelle la structure de pare-chocs est une structure de pare-chocs avant.

8. Véhicule automobile (1) comprenant une structure de pare-chocs selon l'une des revendications 1 à 7.

9. Véhicule automobile (1) selon la revendication 8, dans lequel le véhicule automobile (1) est un camion.

10. Procédé de verrouillage d'une face de pare-chocs (2) sur une poutre de pare-chocs (3) d'un véhicule automobile (1), le procédé mettant en œuvre une structure de pare-chocs selon la revendication 1.

11. Procédé selon la revendication 10, le procédé comprenant :
- la fourniture de la face de pare-chocs (2),
- la fourniture de la poutre de pare-chocs (3),
- le déplacement de la face de pare-chocs (2) vers la poutre de pare-chocs (3), de sorte que chaque saillie de positionnement (13) entre en contact, dans une position rétractée, avec un élément latéral (9) de la poutre de pare-chocs (3), puis de sorte que chaque saillie de positionnement (13) s'étende, dans une position non rétractée, au moins partiellement à l'intérieur du trou de positionnement (13), définissant ainsi la position de verrouillage du système de verrouillage (13, 14).

12. Procédé selon la revendication 10, dans lequel le procédé comprend en outre :
- l'ouverture d'un capot (4) du véhicule automobile (1) et la fixation de la face de pare-chocs (2) à la poutre de pare-chocs (3) en utilisant des boulons (19).

13. Procédé selon l'une des revendications 10 à 12, dans lequel le véhicule automobile (1) est un camion et dans lequel la structure de pare-chocs est une structure de pare-chocs avant.
